# EUROPÄISCHE PATENTSCHRIFT

(11) **EP 2 919 631 B1**
(45) Veröffentlichungstag und Bekanntmachung des Hinweises auf die Patenterteilung: **28.11.2018**
(21) Anmeldenummer: 13745792.5
(22) Anmeldetag: 16.07.2013
(51) Int. Cl.: A47J 37/06, A47J 37/07, A47J 37/10

(54) **GRILLSCHALE**
GRILLING DISH
BAC POUR GRILL

(30) Priorität: 13.11.2012 DE 102012022128
(43) Veröffentlichungstag der Anmeldung: 23.09.2015
(73) Patentinhaber: M.A.C.'s HOLDING GmbH, 91595 Burgoberbach (DE)
(72) Erfinder: KASPAR, Benjamin, 91725 Ehingen (DE)
(74) Vertreter: FDST Patentanwälte
(86) Internationale Anmeldenummer: PCT/EP2013/002102
(87) Internationale Veröffentlichungsnummer: WO 2014/075749

(56) Entgegenhaltungen:
- DE-A1- 10 217 768
- DE-A1- 10 238 180
- DE-U1-202004 009 810
- ES-A1- 2 387 175
- US-A1- 2005 172 948
- US-A1- 2007 169 767
- US-B1- 6 186 055

## Beschreibung

Die Erfindung betrifft eine Grillschale mit einem Schalenkörper und mit einem Griff, insbesondere zur Verwendung für einen Grill oder für einen Racletteofen. Eine derartige Grillschale ist beispielsweise aus der US 2005/172948 A1 bekannt.

Grillschalen werden in unterschiedlichen Ausführungen eingesetzt. Zur Verwendung mit einem (Holzkohle-)Grill sind (Einweg-)Grillschalen aus Aluminium bekannt, mittels derer ein direkter Kontakt des Grillgutes, bspw. Grillfleisch und/oder Fisch, mit Flammen oder Rußpartikeln verhindert werden soll. Diese Grillschalen weisen meist keinen Griff auf, sind in sich relativ labil und müssen notwendigerweise mit Grillbesteck oder Hitzeschutz-Handschuhen gehandhabt werden. Andere Grillschalen, die für eine mehrfache Verwendung bestimmt sind, werden beispielsweise für Racletteöfen verwendet, um Käse und anderes Grillgut zu schmelzen bzw. zu garen. Solche (Raclette-)Grillschalen weisen häufig einen mit Kunststoff ummantelten Griff auf, der seitlich von der Grillschale abragt.

Ein seitlich abragender Griff ist wiederum für den Einsatz der Grillschale an offenem Feuer, beispielsweise einem Grill, einer Feuerstelle oder beispielsweise einem Gaskocher, nachteilig, da der Griff stark erwärmt wird. Ein anderweitig angeordneter Griff erhöht allerdings wiederum das Packmaß der Grillschale, also deren Raumbedarf, wenn sie nicht benötigt wird, beispielsweise in einer Tasche, in einem Schrank oder in der Geschirrspülmaschine.

Der Erfindung liegt die Aufgabe zugrunde, eine Grillschale mit verbesserter Handhabbarkeit anzugeben.

Diese Aufgabe wird erfindungsgemäß gelöst durch eine Grillschale mit den Merkmalen des Anspruchs 1. Vorteilhafte und teils für sich erfinderische Ausführungsformen und Weiterentwicklungen der Erfindung sind in den Unteransprüchen und der nachfolgenden Beschreibung dargelegt.

Erfindungsgemäß umfasst die Grillschale einen Schalenkörper und einen Griff. Des Weiteren umfasst die Grillschale einen Bajonettverschluss, mittels dessen der Griff an dem Schalenkörper in einer Gebrauchsstellung lösbar gehaltert ist.

Der Bajonettverschluss ist insbesondere aus einem positiven Verschlussstück und einem negativen Verschlussstück gebildet. Das positive Verschlussstück ist dabei an einer Kontaktfläche des Schalenkörpers oder an einer Kontaktfläche des Griffs angeordnet, während das negative Verschlussstück entsprechend an der Kontaktfläche des Griffs bzw. des Schalenkörpers angeordnet ist. Die beiden Kontaktflächen des Schalenkörpers und des Griffs sind insbesondere flach ausgebildet und in der Gebrauchsstellung zueinander parallel ausgerichtet, wobei die positiven und negativen Verschlussstücke des Bajonettverschlusses miteinander in Eingriff stehen. Insbesondere liegen die beiden Kontaktflächen in der Gebrauchsstellung aufeinander auf, so dass eine Kraft von dem Griff über eine möglichst große Fläche auf den Schalenkörper eingeleitet werden kann und somit eine besonders stabile Verbindung zwischen dem Griff und dem Schalenkörper gebildet ist.

Das negative Verschlussstück des Bajonettverschlusses ist als kreisabschnittsförmiger Schlitz in einer der beiden Kontaktflächen ausgeführt. Der Schlitz ist dabei in Umfangsrichtung durch mindestens einen Vorsprung radial verjüngt. Mit anderen Worten verläuft der Schlitz entlang einer Kreislinie und wird in Umfangsrichtung an wenigstens einer Stelle schmaler. Bevorzugt ragt der Vorsprung dabei radial von innen in den Schlitz hinein.

Das positive Verschlussstück ist an der jeweils anderen Kontaktfläche in Form von mindestens einer Lasche ausgeführt. Die Lasche ist dabei derart gestaltet, dass sie in der Gebrauchsstellung den oder einen der Vorsprünge hintergreift. Im Rahmen der Erfindung ist es auch denkbar, dass das negative Verschlussstück durch eine kreisförmige Aussparung in der jeweiligen Kontaktfläche gebildet ist, wobei der oder jeder Vorsprung radial von außen in die Aussparung hineinragt. In fertigungstechnisch einfacher Ausführung sind der Schlitz und die Lasche jeweils durch Stanzen und (im Fall der Lasche zusätzlich) durch Blechbiegen aus dem Schalenkörper bzw. dem Griff ausgeformt.

Der Schalenkörper ist vorzugsweise aus einem umgeformten Blechhalbzeug hergestellt, beispielsweise tiefgezogen, und weist bevorzugt eine Vertiefung zur Aufnahme von Grillgut auf. Im Rahmen der Erfindung ist es denkbar, dass der Schalenkörper wenigstens auf der Oberseite, d.h. derjenigen Seite, auf der bestimmungsgemäß das Grillgut eingelegt wird, eine Anti-Haft-Beschichtung aufweist.

Als "Bajonettverschluss" wird hier und im Folgenden ein Verschlusssystem bezeichnet, bei dem zwei miteinander zu verbindende Teile durch Ineinanderstecken und Verdrehen gegeneinander formschlüssig verbunden werden. Unter "Gebrauchsstellung" wird hier und im Folgenden diejenige Positionierung des Griffs an dem Schalenkörper verstanden, in der der Schalenkörper und der Griff miteinander bestimmungsgemäß verbunden sind.

Die lösbare Halterung des Griffs ermöglicht dabei, dass beispielsweise zum Verpacken oder Spülen der Grillschale der Griff von dem Schalenkörper abgenommen werden kann, so dass der Schalenkörper und der Griff voneinander getrennt besonders kompakt verstaut bzw. besonders einfach gereinigt werden können. Der Bajonettverschluss ermöglicht dabei vorteilhafterweise eine stabile, d.h. unbewegliche, Verbindung zwischen dem Griff und dem Schalenkörper, so dass die Handhabung der Grillschale, beispielsweise in der heißen Umgebung eines Grills, ebenfalls erleichtert ist. Des Weiteren ist der Bajonettverschluss vorzugsweise einstückig mit der Grillschale verbunden, d.h. in diese integriert, so dass ein besonders einfacher Aufbau der Grillschale gegeben ist.

Die Grillschale ist insbesondere zur Verwendung mit einem Grill, einem Racletteofen oder auch einem Gaskocher vorgesehen. Um eine stabile Auflage, beispielsweise auf dem Grillrost zu ermöglichen, ist der Boden der Vertiefung in dem Schalenkörper vorzugsweise flach ausgeführt.

Zweckmäßigerweise ist die oder jede Lasche im Wesentlichen L-förmig ausgebildet. Das heißt, dass die Lasche zwei Abschnitte aufweist, die unter einem Winkel miteinander verbunden sind. Der freie Abschnitt der Lasche, d.h. der der Kontaktfläche entfernte Abschnitt, ist dabei näherungsweise parallel zu der Kontaktfläche angeordnet. Mit diesem freien Abschnitt hintergreift die Lasche in der Gebrauchsstellung den Vorsprung.

In bevorzugter Variante ist das negative Verschlussstück des Bajonettverschlusses in drei Schlitze aufgeteilt, die jeweils durch einen Vorsprung radial verjüngt sind und die auf einer Kreislinie angeordnet sind. Das positive Verschlussstück weist analog drei Laschen auf, die ebenfalls auf einer Kreislinie angeordnet sind. Zweckmäßigerweise sind die drei Laschen derart angeordnet, dass jeweils eine der Laschen in der Gebrauchsstellung in einen der Schlitze eingreift und den Vorsprung des jeweiligen Schlitzes hintergreift.

Im Rahmen der Erfindung ist es dabei denkbar, dass die Schlitze und Laschen jeweils in unterschiedlichen Winkeln bezüglich des Mittelpunkts der Kreislinie, auf der sie angeordnet sind, verteilt sind. Dadurch kann der Griff in lediglich einer Ausrichtung an dem Schalenkörper montiert werden. Vorzugsweise sind aber die Laschen und die Schlitze gleichverteilt um den Mittelpunkt der jeweiligen Kreislinie, insbesondere in einem Winkel von 120 Grad zueinander, angeordnet. Dadurch kann der Griff in drei verschiedenen Ausrichtungen an dem Schalenkörper montiert und dadurch an bestimmte Gegebenheiten und/oder Vorlieben eines Benutzers angepasst werden.

Zweckmäßigerweise ist in jedem der Schlitze der jeweilige Vorsprung in Umfangsrichtung gesehen an einem Ende des Schlitzes angeordnet, so dass jeder Schlitz jeweils lediglich einen breiten und lediglich einen schmalen Abschnitt aufweist. Bei der Montage des Griffes an dem Schalenkörper werden die Kontaktflächen des Griffs und des Schalenkörpers derart aneinander gesetzt, dass die Laschen jeweils durch den breiten Bereich der Schlitze durchragen. Unter einer Drehung des Schalenkörpers und des Griffes gegeneinander gleiten die Laschen entlang der Schlitze, so dass die Laschen im schmalen Bereich der Schlitze unter den Vorsprüngen anliegen. Die Enden der Schlitze bilden dabei vorteilhafterweise jeweils einen Anschlag, so dass die Gebrauchsstellung mit dem Anschlagen der Laschen an den Enden der Schlitze erreicht ist. Somit ist auch jeweils nur eine Drehrichtung zum Verbinden und zum Lösen des Griffs an bzw. von dem Schalenkörper möglich.

In zweckmäßiger Ausführung ist die oder jede Lasche in einem (Steigungs-)Winkel gegen die Umfangsrichtung angestellt. Bei L-förmiger Ausführung der Lasche ist vorzugsweise jeweils der freie Abschnitt der Lasche in dem Winkel gegen die Umfangsrichtung angestellt. Dieser Winkel öffnet sich insbesondere in Drehrichtung zur Gebrauchsstellung. Mit anderen Worten ist der freie Abschnitt der jeweiligen Lasche gegenüber dem Vorsprung des Schlitzes nach Art eines Gewindeganges einer Schraube angestellt. Dadurch wird auf einfache Weise eine Klemmkraft zwischen dem Griff und dem Schalenkörper erreicht, indem der freie Abschnitt schräg auf den Vorsprung des Schlitzes aufgleitet, so dass der Schalenkörper und der Griff zueinander gezogen werden.

Um die Klemmung zwischen dem Griff und dem Schalenkörper in der Gebrauchsstellung zu verbessern, insbesondere um ein unbeabsichtigtes Lösen des Griffs von dem Schalenkörper zu verhindern, sind an dem Griff und an dem Schalenkörper zweckmäßigerweise Rastmittel angeordnet. Mittels der Rastmittel ist der Griff in der Gebrauchsstellung vorzugsweise durch Formschluss mit dem Schalenkörper verkrallt, so dass eine Drehbewegung zwischen dem Griff und dem Schalenkörper behindert ist.

In einer bevorzugten Ausführung sind die Rastmittel in Form von mindestens einem Durchbruch, beispielsweise einem runden Loch, und einer Noppe ausgebildet, wobei die Noppe in der Gebrauchsstellung in dem Durchbruch einliegt. Der Durchbruch ist dabei entweder in der Kontaktfläche des Schalenkörpers oder in der Kontaktfläche des Griffs ausgeführt. Die Noppe ist an der jeweils gegenüberliegenden Kontaktfläche angeordnet. Als "Noppe" wird hier und im Folgenden insbesondere ein vergleichsweise kleiner Materialaufwurf, beispielsweise ein Schweißpunkt, auf der jeweiligen Kontaktfläche oder eine aus der Kontaktfläche hervorstehende Beule gebildet, die von der Rückseite der Kontaktfläche her durch Tiefziehen oder Stanzen ausgeformt wird. Bei der Montage des Griffs an dem Schalenkörper schnappt die Noppe unter gegenläufigem Drehen von Griff und Schalenkörper beim Erreichen der Gebrauchsstellung in den Durchbruch ein und stellt dadurch den Formschluss her.

In einer weiteren vorteilhaften Ausführungsform ist der oder jeder Durchbruch bzw. die oder jede Noppe auf der Kreislinie des oder jeden Schlitzes angeordnet. Insbesondere sind die gegebenenfalls mehreren Durchbrüche bzw. Noppen in Umfangsrichtung gesehen in Verlängerung zu dem oder jedem Schlitz angeordnet. Vorzugsweise weist die Kontaktfläche des Schalenkörpers jeweils drei der vorstehend beschriebenen Schlitze oder Laschen und zwischen jedem Schlitz bzw. jeder Lasche jeweils einen Durchbruch oder eine Noppe auf. Die Kontaktfläche des Griffs weist entsprechend komplementär die gleiche Anzahl Laschen bzw. Schlitze mit in Umfangsrichtung dazwischen angeordneten Noppen bzw. Durchbrüchen auf.

Durch diese Anordnung der Verschlussstücke und der Rastmittel auf jeweils einer Kreislinie nebeneinander wird einerseits eine kompakte Gestaltung des Bajonettverschlusses inklusive der Rastmittel erreicht. Andererseits wird dadurch ermöglicht, dass jede der beiden Kontaktflächen auf einfache Weise mit jeweils einem einfachen und kompakten Stanz- oder Tiefziehwerkzeug bearbeitet werden kann, so dass der Herstellungsaufwand besonders gering ist.

In bevorzugter Ausführung handelt es sich bei dem Griff um ein Winkelblech, an dessen ersten Ende die Kontaktfläche zur Verbindung mit dem Schalenkörper ausgebildet ist, und an dessen zweiten Ende ein Griffstück angeordnet ist. Das Griffstück ist insbesondere aus Materialien mit niedriger Temperaturleitfähigkeit, beispielsweise aus temperaturbeständigem, vorzugsweise spülmaschinengeeignetem, Kunststoff oder Holz ausgebildet.

In bestimmungsgemäßer Ausrichtung zu dem Schalenkörper steht der Griff ähnlich einem Henkel teilweise über die Vertiefung des Schalenkörpers über. Dadurch ist der Schwerpunkt zum Einen über dem Boden der Vertiefung des Schalenkörpers angeordnet, so dass die Griffschale stabil und kippfest auf einer Unterlage aufliegt. Zum Anderen ist das Griffstück durch den Schalenkörper vorteilhaft gegen die Hitze des Grills, Racletteofens etc. abgeschirmt, so dass es vorzugsweise ohne wärmeisolierende Hilfsmittel gehandhabt werden kann.

Nachfolgend wird ein Ausführungsbeispiel der Erfindung anhand einer Zeichnung näher erläutert. Darin zeigen:
- Fig. 1 bis Fig. 4: eine Grillschale mit einem Schalenkörper und einem Griff in perspektivischer Darstellung, einer Seitenansicht, einer Rückansicht und in Draufsicht auf eine Unterseite,
- Fig. 5 und Fig. 6: den Schalenkörper in perspektivischer Darstellung sowie in Draufsicht auf eine Oberseite, und
- Fig. 7 und Fig. 8: den Griff in Seitenansicht und in Draufsicht auf die Unterseite.

Einander entsprechende Teile sind in allen Figuren stets mit gleichen Bezugszeichen versehen.

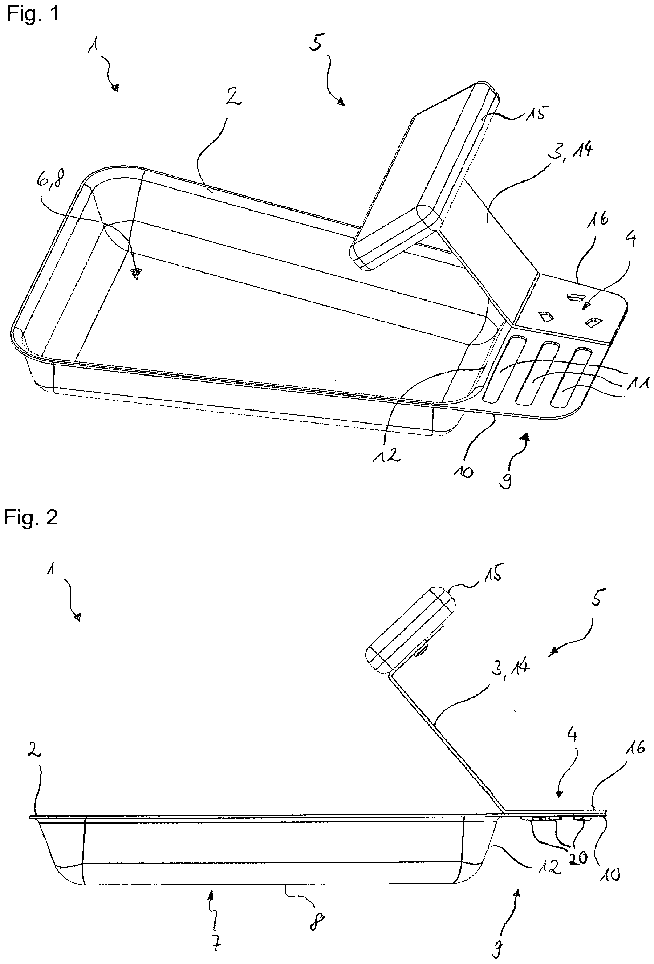

Eine in Fig. 1 bis Fig. 4 dargestellte Grillschale 1 umfasst einen Schalenkörper 2 und einen Griff 3. Außerdem umfasst die Grillschale 1 einen Bajonettverschluss 4, mittels dessen der Griff 3 in einer Gebrauchsstellung 5 lösbar an dem Schalenkörper 2 gehalten ist.

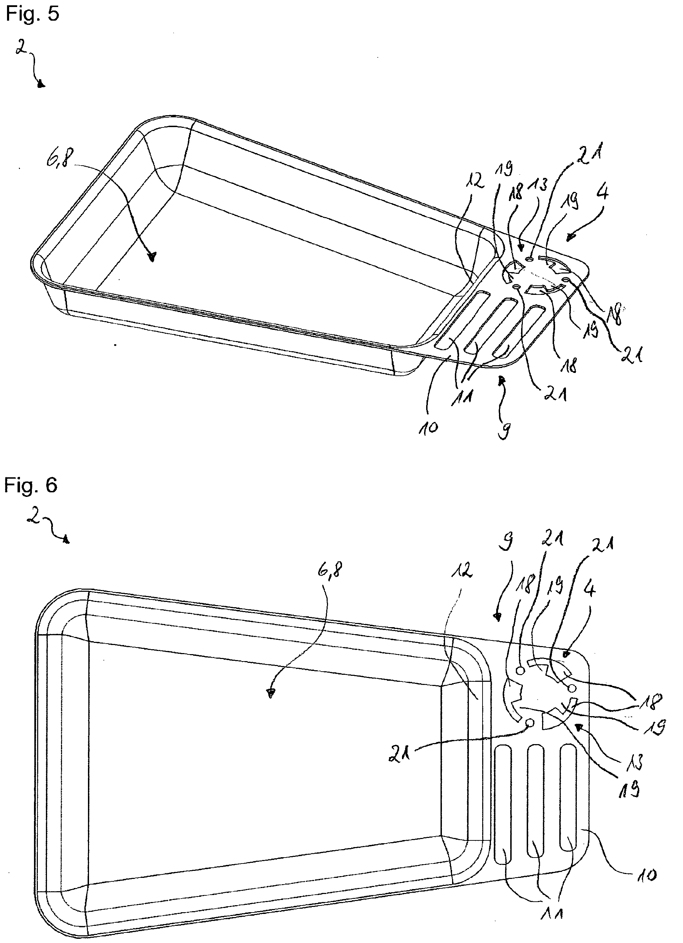

Der Schalenkörper 2 (einzeln dargestellt in Fig. 5 und Fig. 6) ist aus einem Blech, beispielsweise aus Aluminium oder Edelstahl, durch Tiefziehen und Stanzen hergestellt. Zur Aufnahme von Grillgut, beispielsweise Speisen wie Grillfleisch, Fisch oder Gemüse, weist der Schalenkörper 2 eine Vertiefung 6 auf, die zur Unterseite 7 hin ausgeformt ist und einen flachen Boden 8 aufweist. Die Vertiefung 6 erstreckt sich nahezu über die gesamte, trapezförmige Grundfläche des Schalenkörpers 2, wobei an einem schmalen Ende 9 eine vergleichsweise lange Blechlippe 10 von dem Schalenkörper 2 absteht. In der Blechlippe 10 sind drei Einschnitte 11 eingestanzt, die sich parallel zu einer Schmalseite 12 der Vertiefung 6 über etwa zwei Drittel der Breite der Blechlippe 10 erstrecken. Der Bajonettverschluss 4 ist hierbei in einem seitlichen Bereich 13 der Blechlippe 10 angeordnet, der nicht durch die Einschnitte 11 durchbrochen ist (s. Figuren 1, 4 - 6). Die Einschnitte 11 dienen beispielsweise dazu, dass der Griff 3 nicht übermäßig erhitzt wird, indem die von einem Grill oder einer Heizplatte abgestrahlte Hitze nicht vollständig von der Blechlippe 10 absorbiert und in den Griff 3 weitergeleitet wird.

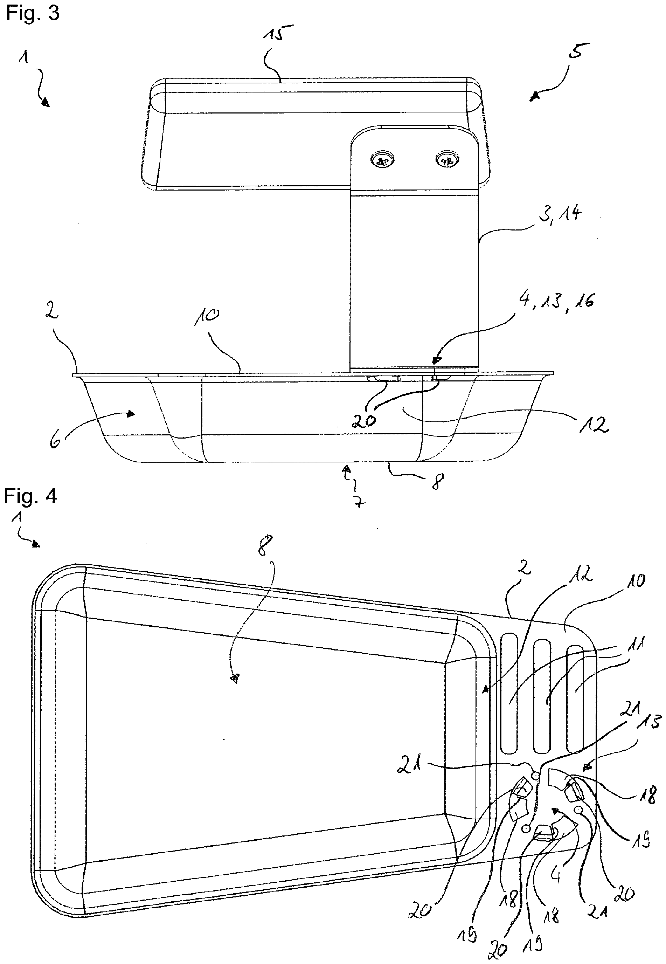

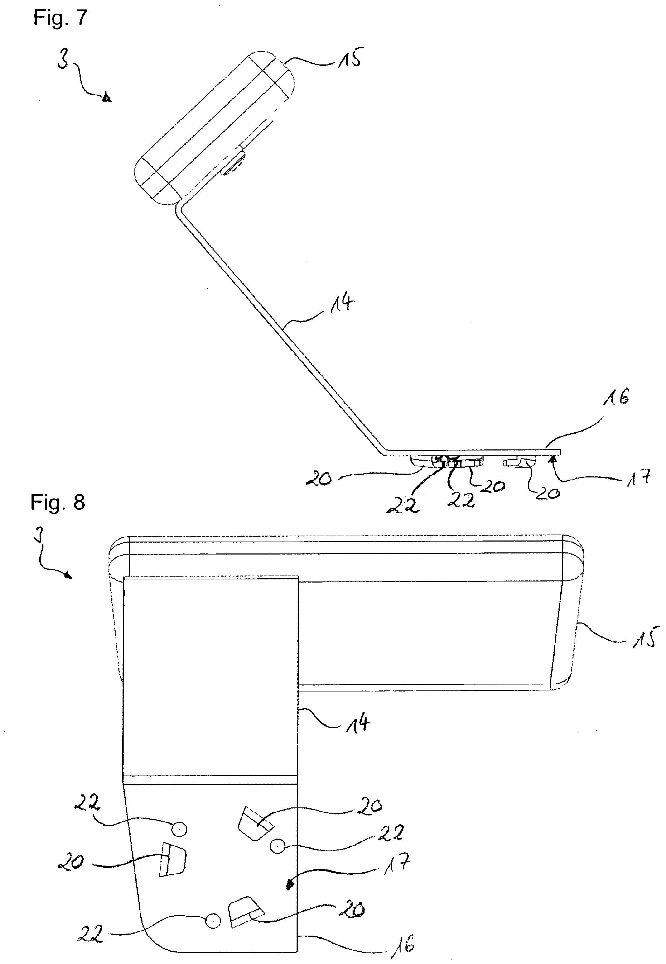

Der Griff 3 (einzeln dargestellt in Fig. 7 und Fig. 8) umfasst ein Winkelblech 14 und ein Griffstück 15, das beispielsweise aus Kunststoff, Holz oder Keramik gefertigt ist, und das L-förmig zu dem Winkelblech 14 angeordnet und mit diesem verschraubt ist (s. Figuren 1, 3 und 8). An einem ersten Ende (kurz: Freiende 16) des Winkelblechs 14 ist das Winkelblech 14 derart ausgeformt, dass sich eine Kontaktfläche 17 ergibt (siehe Fig. 8), die in der Gebrauchsstellung 5 parallel zu der Blechlippe 10 bzw. deren Bereich 13 ausgerichtet ist (siehe Fig. 2 und Fig. 3). Der Bereich 13 bildet somit eine der Kontaktfläche 17 gegenüberliegende Kontaktfläche des Schalenkörpers 2.

Der Griff 3 ist in der bestimmungsgemäßen Gebrauchsstellung 5 derart an dem Schalenkörper 2 angeordnet, dass das Griffstück 15 zumindest teilweise über die Vertiefung 6 übersteht. Dabei wird durch die seitliche Anordnung des Bajonettverschlusses 4 auf dem Bereich 13 des Schalenkörpers 2 erreicht, dass das Winkelblech 14 nur in einem möglichst kleinen Raum über der Vertiefung 6 abdeckt, so dass letztere von möglichst allen Seiten frei zugänglich ist und das Einlegen oder Wenden des Grillguts nahezu kaum eingeschränkt ist.

Der Bajonettverschluss 4 weist, wie aus den Fig. 4 bis 8 zu erkennen ist, ein positives und ein negatives Verbindungsstück auf. Als positives Verbindungsstück wird hierbei beispielsweise ein hervorspringendes Element verstanden, das in das negative Verbindungsstück, beispielsweise eine Aussparung eingreift. In dem dargestellten Ausführungsbeispiel der Grillschale 1 ist das negative Verbindungsstück in Form von drei kreisabschnittsförmigen Schlitzen ausgeführt, die auf einer gemeinsamen Kreislinie jeweils um 120° versetzt in den Bereich 13 der Blechlippe 10 eingeformt sind. Jeder der Schlitze 18 wird dabei durch jeweils einen Vorsprung 19, der radial von innen her in den jeweiligen Schlitz 18 hineinragt, verjüngt. Das positive Verbindungsstück des Bajonettverschlusses 4 ist an der Kontaktfläche 17 des Griffes 3 in Form dreier L-förmiger Laschen 20 ausgeformt, die korrespondierend zu den Schlitzen 18 an der Kontaktfläche 17 angeformt sind. Die Laschen 20 sind dabei derart ausgeformt, dass sie zur Montage des Griffs 3 an dem Schalenkörper 2 jeweils in die Nuten 18 eingesetzt werden, und dass sie nach einer Drehung des Griffs 3 entgegen des Uhrzeigersinns die Vorsprünge 19 hintergreifen.

Wie aus Fig. 7 zu erkennen ist, sind die Laschen 20 gegenüber der Kontaktfläche 17 schräg angestellt. Jede einzelne Lasche 20 ist also wie ein Gewindegang einer Schraube mit einem (Steigungs-)Winkel gegenüber der Eindrehrichtung in die Gebrauchsstellung 5 angestellt. Dadurch üben die Laschen 20 beim Eindrehen in die Gebrauchsstellung 5 vergleichbar dem Einschrauben einer Schraube eine zunehmende Klemmkraft auf die Vorsprünge 19 und somit auf den Schalenkörper 2 aus.

Um den Griff 3 in der Gebrauchsstellung 5 mit dem Schalenkörper 2 zu verrasten, d.h. durch einen Formschluss gegen unbeabsichtigtes Lösen bzw. Losdrehen aus der Gebrauchsstellung zu sichern, sind im Bereich 13 der Blechlippe 10 und an der Kontaktfläche 17 des Winkelblechs 14 jeweils miteinander korrespondierende Rastmittel angeordnet (siehe Figuren 4 bis 8). Die Rastmittel umfassen dabei drei Durchbrüche in Form von kreisrunden Bohrungen 21, die zwischen den Schlitzen 18 an dem Schalenkörper 2 angeordnet sind. Des Weiteren umfassen die Rastmittel drei korrespondierend zu den Bohrungen 21 an der Kontaktfläche 17 angeordnete Noppen 22. Die Noppen 22 sind dabei mit runder Grundfläche ausgeführt und weisen dabei einen Durchmesser auf, der gegenüber dem Durchmesser der Bohrungen 21 geringfügig vergrößert ist. Dadurch können die Noppen 22 in der Gebrauchsstellung 5 nicht vollständig in den Bohrungen 21 einliegen und die Kontaktfläche 17 wird gegen die durch den Bereich 13 gebildete Kontaktfläche des Schalenkörpers 2 verspannt. Zudem wird dadurch ein besonders deutliches Einschnappen der Noppen 22 in die Bohrungen 21 erreicht, so dass das Erreichen der Gebrauchsstellung 5 beim Eindrehen des Griffes 3 spürbar und hörbar ist.

Der Gegenstand der Erfindung ist nicht auf das vorstehend beschriebene Ausführungsbeispiel beschränkt. Vielmehr können weitere Ausführungsformen der Erfindung von dem Fachmann aus der vorstehenden Beschreibung abgeleitet werden.

### Bezugszeichenliste

- 1: Grillschale
- 2: Schalenkörper
- 3: Griff
- 4: Bajonettverschluss
- 5: Gebrauchsstellung
- 6: Vertiefung
- 7: Unterseite
- 8: Boden
- 9: Ende
- 10: Blechlippe
- 11: Einschnitt
- 12: Schmalseite
- 13: Bereich
- 14: Winkelblech
- 15: Griffstück
- 16: Freiende
- 17: Kontaktfläche
- 18: Schlitz
- 19: Vorsprung
- 20: Lasche
- 21: Bohrung
- 22: Noppe

## Patentansprüche

1. Grillschale (1) mit einem Schalenkörper (2) und mit einem Griff (3),
**gekennzeichnet durch**
einen Bajonettverschluss (4), mittels dessen der Griff (3) in einer Gebrauchsstellung (5) lösbar an dem Schalenkörper (2) gehaltert ist, wobei der Bajonettverschluss (4) mindestens einen kreisabschnittförmigen Schlitz (18), der in dem Schalenkörper (2) oder in dem Griff (3) ausgeformt ist und der in Umfangsrichtung durch mindestens einen Vorsprung (19) radial verjüngt ist, und mindestens eine Lasche (20) umfasst, die an dem Griff (3) bzw. dem Schalenkörper (2) angeordnet ist und in der Gebrauchsstellung (5) den Vorsprung (19) hintergreift.

2. Grillschale (1) nach Anspruch 1,
**dadurch gekennzeichnet,**
**dass** der Bajonettverschluss (4) an in der Gebrauchsstellung (5) zueinander parallel ausgerichteten Kontaktflächen (17) des Schalenkörpers (2) und des Griffs (3) ausgebildet ist.

3. Grillschale (1) nach Anspruch 1 oder 2,
**dadurch gekennzeichnet,**
**dass** die oder jede Lasche (20) im Wesentlichen L-förmig von dem Schalenkörper (2) oder dem Griff (3) abragt.

4. Grillschale (1) nach einem der Ansprüche 1 bis 3,
**dadurch gekennzeichnet,**
**dass** der Bajonettverschluss (4) drei Schlitze (18) und drei zugeordnete Laschen (20) umfasst, die jeweils auf einer Kreislinie angeordnet sind.

5. Grillschale (1) nach einem der Ansprüche 1 bis 4,
**dadurch gekennzeichnet,**
**dass** die oder jede Lasche (20) zu dem oder jedem Vorsprung (19) eines jeden Schlitzes (18) in Umfangsrichtung in einem Winkel angestellt ist.

6. Grillschale (1) nach einem der Ansprüche 1 bis 5,
**dadurch gekennzeichnet,**
**dass** an dem Schalenkörper (2) und an dem Griff (3) Rastmittel (21, 22) ausgebildet sind, mittels derer der Griff (3) in der Gebrauchsstellung (5) an dem Schalenkörper (2) verrastet ist.

7. Grillschale (1) nach Anspruch 6,
**dadurch gekennzeichnet,**
**dass** die Rastmittel in Form von mindestens einem Durchbruch (21), der an dem Schalenkörper (2) oder dem Griff (3) angeordnet ist, und mindestens einer zu dem oder jedem Durchbruch (21) korrespondierenden Noppe (22), die an dem Griff (3) bzw. dem Schalenkörper (2) angeordnet ist, ausgebildet sind.

8. Grillschale (1) nach Anspruch 7,
**dadurch gekennzeichnet,**
**dass** der oder jeder Durchbruch (21) und die oder jede Noppe (22) in Umfangsrichtung in Verlängerung zu dem oder jedem Schlitz (18) bzw. zu der oder jeder Lasche (22) angeordnet sind.

9. Grillschale (1) nach eine der Ansprüche 1 bis 8,
**dadurch gekennzeichnet,**
**dass** der Griff (3) in Form eines Winkelblechs (14) ausgeführt ist, an dem ein Griffstück (15) angeordnet ist.

## Claims

1. Grill dish (1) having a dish body (2) and having a handle (3),
**characterised by**
a bayonet catch (4) by means of which the handle (3) is detachably mounted on the dish body (2) in a usage position (5), wherein the bayonet catch (4) comprises at least one circular segment-shaped slot (18), which is moulded in the dish body (2) or in the handle (3) and which is radially tapered in the circumferential direction by at least one projection (19), and at least one tab (20), which is arranged on the handle (3) or the dish body (2) and engages behind the projection (19) in the usage position.

2. Grill dish (1) according to claim 1,
**characterised in that**
the bayonet catch (4) is formed on contact faces (17) of the dish body (2) and of the handle (3), said contact faces (17) being aligned in parallel to one another in the usage position (5).

3. Grill dish (1) according to claim 1 or 2,
**characterised in that**
the or each tab (20) protrudes substantially in an L-shape from the dish body (2) or the handle (3).

4. Grill dish (1) according to one of claims 1 to 3,
**characterised in that**
the bayonet catch (4) comprises three slots (18) and three allocated tabs (20), which are respectively arranged on a circumference.

5. Grill dish (1) according to one of claims 1 to 4,
**characterised in that**
the or each tab (20) is inclined in the circumferential direction at an angle with respect to the or each projection (19) of each slot (18).

6. Grill dish (1) according to one of claims 1 to 5,
**characterised in that**
latching means (21, 22) are formed on the dish body (2) and on the handle (3), by means of which latching means (21, 22) the handle (3) is latched on the dish body (2) in the usage position (5).

7. Grill dish (1) according to claim 6,
**characterised in that**
the latching means are formed in the shape of at least one aperture (21), which is arranged on the dish body (2) or the handle (3), and at least one knob (22) corresponding to the or each aperture (21), said knob (22) being arranged on the handle (3) or the dish body (2).

8. Grill dish (1) according to claim 7,
**characterised in that**
the or each aperture (21) and the or each knob (22) are arranged in the circumferential direction in extension to the or each slot (18) or to the or each tab (22).

9. Grill dish (1) according to one of claims 1 to 8,
**characterised in that**
the handle (3) is designed in the shape of an angle plate (14) on which a handle piece (15) is arranged.

## Revendications

1. Bac pour grill (1) comportant un corps de bac (2) et une poignée (3),
**caractérisé par**
une fermeture à baïonnette (4) au moyen de laquelle la poignée (3) est montée de manière détachable sur le corps de bac (2) dans une position d'utilisation (5), la fermeture à baïonnette (4) comprenant au moins une fente (18) en forme de section de cercle qui est formée dans le corps de bac (2) ou dans la poignée (3) et qui se rétrécie radialement dans la direction circonférentielle par au moins une saillie (19), et au moins une patte (20) qui est disposée sur la poignée (3) ou sur le corps de bac (2) respectivement et qui s'engage derrière la saillie (19) dans la position d'utilisation (5).

2. Bac pour grill (1) selon la revendication 1,
**caractérisée en ce que**
la fermeture à baïonnette (4) est formée sur des surfaces de contact (17) du corps de bac (2) et de la poignée (3) qui sont orientées parallèlement l'une à l'autre en position d'utilisation (5).

3. Bac pour grill (1) selon la revendication 1 ou 2,
**caractérisé en ce que**
la ou chaque patte (20) dépasse sensiblement en forme de L du corps de bac (2) ou de la poignée (3).

4. Bac pour grill (1) selon l'une des revendications 1 à 3,
**caractérisé en ce que**
la fermeture à baïonnette (4) comprend trois fentes (18) et trois pattes (20) associées qui sont disposées chacune sur une ligne circulaire.

5. Bac pour grill (1) selon l'une des revendications 1 à 4,
**caractérisé en ce que**
la ou chaque patte (20) est placée en faisant, en direction circonférentielle, un angle par rapport à la ou à chaque saillie (19) de chaque fente (18).

6. Bac pour grill (1) selon l'une des revendications 1 à 5,
**caractérisé en ce que**
des moyens d'encliquetage (21, 22) sont formés sur le corps de bac (2) et sur la poignée (3) au moyen desquels la poignée (3) est encliquetée sur corps de bac (2) dans la position d'utilisation (5).

7. Bac pour grill (1) selon la revendication 6,
**caractérisé en ce que**
les moyens d'encliquetage se présentent sous la forme d'au moins une encoche (21) disposée sur le corps de bac (2) ou sur la poignée (3) et d'au moins un bouton (22) correspondant à la ou à chaque encoche (21) et disposé sur la poignée (3) ou sur le corps de bac (2) respectivement.

8. Bac pour grill (1) selon la revendication 7,
**caractérisé en ce que**
la ou chaque encoche (21) et le ou chaque bouton (22) sont disposés en direction circonférentielle dans le prolongement de la ou de chaque fente (18) ou de la ou de chaque patte (22) respectivement.

9. Bac pour grill (1) selon l'une des revendications 1 à 8,
**caractérisé en ce que**
la poignée (3) est réalisée sous la forme d'une plaque angulaire (14) sur laquelle est disposée une pièce de poignée (15).
